## Europäisches Patentamt
## European Patent Office
## Office européen des brevets

(19)

(11) Veröffentlichungsnummer: **0 226 806**
**B1**

(12) # EUROPÄISCHE PATENTSCHRIFT

(45) Veröffentlichungstag der Patentschrift:
28.02.90

(51) Int. Cl.⁴: **G01F 23/16, G21C 17/02**

(21) Anmeldenummer: **86115810.3**

(22) Anmeldetag: **13.11.86**

(54) **Verfahren und Einrichtung zur Messung des Füllstandes in einem Reaktordruckbehälter eines Siedewasserreaktors.**

(30) Priorität: **25.11.85  DE 3541613**

(43) Veröffentlichungstag der Anmeldung:
**01.07.87 Patentblatt 87/27**

(45) Bekanntmachung des Hinweises auf die Patenterteilung:
**28.02.90 Patentblatt 90/9**

(84) Benannte Vertragsstaaten:
**CH DE LI SE**

(56) Entgegenhaltungen:
DE-A- 2 941 544

REGELUNGSTECHNISCHE PRAXIS, Band 17,
Nr. 5, 1975, Seiten M17-M20, R. Oldenburg Verlag,
München, DE; G. STROHRMANN: "Lösungen von
MSR-Aufgaben"
PATENTS ABSTRACTS OF JAPAN, Band 6,
Nr. 34 (P-104)[912], 2. März 1982; &
JP-A-56 154 617 (HITACHI SEISAKUSHO
K.K.) 30-11-1981
PATENTS ABSTRACTS OF JAPAN, Band 18,
Nr. 269 (P-319)[1706], 8. Dezember 1984; &
JP-A-59 137 823 (MITSUBISHI JUKOGYO
K.K.) 08-08-1984
"Brennstoff-Wärme-Kraft 28" (1976), Nr.6, Juni,
Seiten 229-233

(73) Patentinhaber: **Siemens Aktiengesellschaft,
Wittelsbacherplatz 2, D-8000 München 2(DE)**

(72) Erfinder: **Walleser, Albin, Dipl.-Phys.,
Bernardstrasse 100, D-6050 Offenbach(DE)**

(56) Entgegenhaltungen: (Fortsetzung)
**Die Akte enthält technische Angaben, die nach dem
Eingang der Anmeldung eingereicht wurden und die
nicht in dieser Patentschrift enthalten sind.**

## Beschreibung

Die Erfindung betrifft ein Verfahren zur Messung des Füllstandes in einem Reaktordruckbehälter eines Siedewasserreaktors gemäß Oberbegriff des Patentanspruchs 1. Sie betrifft ferner eine Einrichtung zur Durchführung eines solchen Verfahrens gemäß dem Oberbegriff des Patentanspruchs 3.

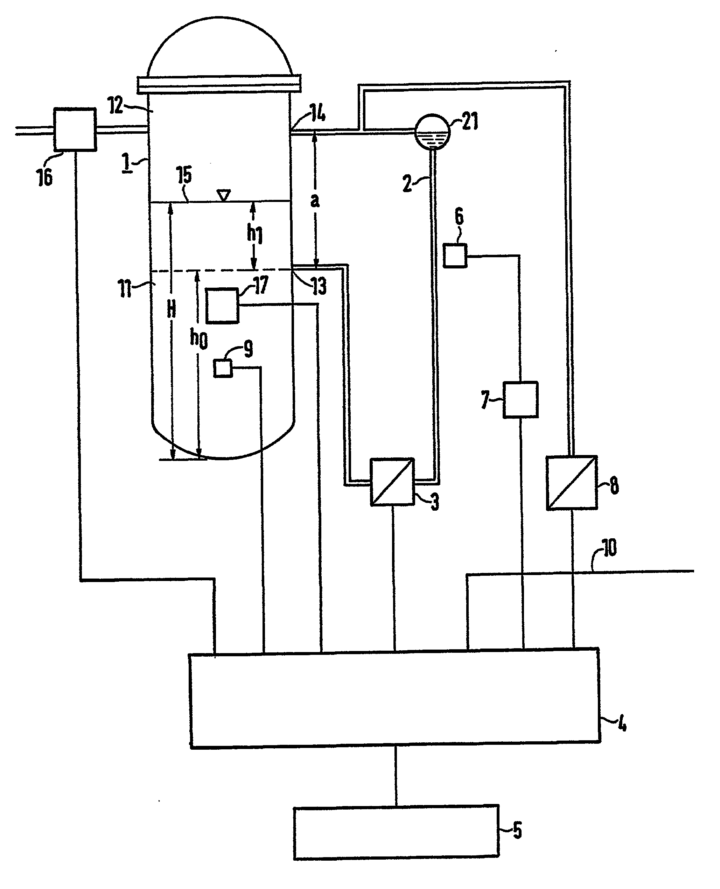

Ein solches Verfahren und eine solche Einrichtung sind unter dem Begriff "hydrostatische Höhenstandsmessung" z.B. bekannt durch die Zeitschrift "Brennstoff-Wärme-Kraft 28" (1976), Nr. 6, Juni, Seiten 229 – 233, insbesondere Seite 229 mit Bild 1. Bei dieser bekannten hydrostatischen Höhenstandsmessung wird davon ausgegangen, daß der Druck der Flüssigkeit im Reaktordruckbehälter nur geringfügig infolge von Druckschwankungen im Dampfraum schwankt. Außer einer Druckkorrektur wird daher eine weiterreichende Korrektur der bekannten Flüssigkeitsdichte nicht durchgeführt. Der gemessene Füllstand entspricht folglich, insbesondere bei transienten Vorgängen, nicht dem wirklichen Füllstand im Reaktordruckbehälter, denn bei Störfällen können die Meßwertabweichungen vom wirklichen Füllstand groß sein, weil gerade dann die Flüssigkeitsdichte durch mehrere Parameter beeinflußt wird.

Im Prinzip treffen diese Ungenauigkeiten bei der Füllstandsmessung auf eine Einrichtung zur hydrostatischen Höhenstandsmessung zu, wie sie hervorgeht aus "PATENTS ABSTRACTS OF JAPAN", Band 18, Nr. 269 (P–319) [1706], 8.12.1984; und die dazugehörige JP-A-59 137 823 vom 08.08.1984. In diesem Dokument wird bereits ein Verfahren bzw. die zugehörige Füllstandsmeßeinrichtung beschrieben, bei welchen zur hydrostatischen Höhenstandsmessung die Umgebungstemperatur und der Druck im Dampfraum (für sich genommen) als zusätzliche Einflußgrößen berücksichtigt werden, damit eine größere Meßgenauigkeit erreicht werden kann. Es bleiben aber bei dieser bekannten Füllstandsmessung die dynamischen Effekte, die beispielsweise durch den Dampfmengenstrom und durch den Kerndurchsatz verursacht werden, mit ihren Auswirkungen auf die gemessene Druckdifferenz unberücksichtigt. Daraus folgt, daß die mit den vorerwähnten beiden bekannten Verfahren bzw. den zugehörigen Einrichtungen zur Messung des Füllstandes in einem Reaktordruckbehälter erzielten Meßwerte nur bei idealen äußeren Bedingungen innerhalb tolerierbarer Fehlergrenzen zuverlässig sind. Falls bei einem Störfall der Druck im Reaktordruckbehälter absinkt und sich ein Gemisch an der Trennfläche von Flüssigkeit und Dampf bildet, sind die vorerwähnten bekannten Füllstandsmessungen unzuverlässig. Gerade aber während solcher transienten Vorgänge ist eine exakte Überwachung des Füllstandes im Reaktordruckbehälter wünschenswert.

Verwiesen sei in diesem Zusammenhang noch auf ein nicht gattungsgemäßes bekanntes Verfahren zum Aufrechterhalten des Fluidstandes in einem mit Fluid gefüllten Behälter nach der DE-A1 2 941 544, nach welchem der Dampfabfluß eines Siedewasserreaktors und sein Speisewasserzufluß gemessen und die aufbereiteten Meßgrößen summiert werden, wobei z.B. dann, wenn die abströmende Dampfmenge größer ist als die zuströmende Speisewassermenge ein Speisewassersteuerventil weiter geöffnet und so die Speisewasserzufuhr vergrößert wird. Zusätzlich sind dreikanalig-redundant Druckmeßfühler-Paare, jeweils für den höchsten und den niedrigsten tolerierbaren Füllstand vorgesehen. Von entsprechenden Differenzdruckmeldern dieser drei Kanäle wird jeweils der höchste und der niedrigste Füllstandswert abgefragt und je einer Zwei-von-drei-Auswahllogik für den höchsten und für den niedrigsten Füllstand zugeleitet, deren Ausgangssignale über ein Schaltglied ebenfalls auf das Speisewasser-Steuerventil einwirken. Es ist ferner vorgesehen, daß zwei der drei Kanäle, nämlich Kanal A und Kanal B – für den Fall, daß einer der Kanäle eine Fehlanzeige liefert – abwechselnd einschaltbar sind. Außerdem ist bereits die zeitliche Änderung der Massenstromdifferenz, wie sie die Dampfabfluß- und Speisewasserzufluß-Meßglieder liefern, in Form eines Massenstromdifferenz-Änderungsgeschwindigkeits-Signals innerhalb der Steuerschaltung berücksichtigt.

Dieses bekannte Verfahren beinhaltet insbesondere dann wesentliche Meßungenauigkeiten, wenn die Frischdampfleitung zum Venturirohr des Dampfmengenstrommessers ein Leck aufweist; dann wird durch den Dampfmengenstrommesser ein kleinerer Dampfmengenstrom vorgetäuscht als er in Wirklichkeit vorhanden ist.

Entsprechendes gilt für das Venturirohr, welches zur Speisewasserdurchflußmengenmessung herangezogen ist; auch dabei können sich bei Leitungslecks erhebliche Fehlanzeigen ergeben.

Demgegenüber geht die Erfindung aus vom Meßprinzip der hydrostatischen Höhenstandsmessung an dem zu überwachenden Reaktordruckbehälter selbst; ihr liegt die Aufgabe zugrunde, ein Verfahren zur Messung des Füllstandes in einem Reaktordruckbehälter eines Siedewasserreaktors zu entwickeln, das zusätzlich zu den bekannten Parametern auch solche Meßgrößen berücksichtigt, die insbesondere bei einem Störfall ein fehlerhaftes Meßergebnis bewirken würden. Dadurch soll der Füllstand im Reaktordruckbehälter selbst bei einem Störfall stets mit gleichbleibend guter Genauigkeit bestimmbar sein.

Die Aufgabe wird erfindungsgemäß dadurch gelöst, daß die zeitliche Druckänderung im oberen dampfgefüllten Teilraum des Reaktordruckbehälters, die Reaktorleistung und die Flüssigkeitstemperatur im Reaktordruckbehälter gemessen werden und daraus mit dem gemessenen Druck im Dampfraum und mit bekannten Abmessungen und Größen die Flüssigkeitsdichte im unteren Teilraum des Reaktordruckbehälters bestimmt wird und daß die Umgebungstemperatur im Bereich der Vergleichssäule gemessen und mit bekannten Größen daraus die Flüssigkeitsdichte in der Vergleichssäule bestimmt wird.

Im ungestörten Betrieb des Reaktordruckbehälters wird die Flüssigkeitsdichte im Behälter außer durch den Dampfdruck durch den Dampfgehalt der Flüssigkeit und durch die Einspeisung relativ kühlen Wassers beeinflußt. Diese beiden Effekte kompensieren sich weitgehend, so daß außer der Druckkorrektur keine weitere Korrektur notwendig ist. Falls jedoch bei einem Störfall sich ein Druckabfall im Reaktordruckbehälter einstellt, bildet sich ein Flüssigkeits-Dampfgemisch an der Trennfläche aus. Die Lage der Gemischfront, für die die Flüssigkeitsdichte von Belang ist, ist außer vom Dampfdruck im Reaktordruckbehälter noch von weiteren Parametern abhängig. Diese Parameter sind die Temperatur in der Flüssigkeit, die zeitliche Änderung des Dampfdruckes sowie die Dauer der Druckänderung und die mementane Reaktorleistung. Aus diesen Größen, die gemessen oder bestimmt werden, wird eine mittlere Flüssigkeitsdichte bestimmt.

Die Dichte der Flüssigkeit in der Vergleichssäule ist von deren Umgebungstemperatur abhängig. Der Einfluß des Druckes ist hingegen vernachlässigbar. Insbesondere bei einem Kühlmittelverluststörfall innerhalb des Sicherheitsbehälters ist die Temperatur an der Vergleichssäule nicht immer konstant, so daß nur mit einer ständigen Überwachung der Temperatur ein korrekter Wert für die Flüssigkeitsdichte in der Vergleichssäule zu erhalten ist.

Mit der Erfindung wird der Vorteil erzielt, daß alle Einflüsse auf die Flüssigkeitsdichte im Reaktordruckbehälter und auf die Dichte in der Vergleichssäule erkannt werden und insbesondere bei einem Störfall zuverlässig kompensiert werden. Dadurch wird der Füllstand im Reaktordruckbehälter stets zuverlässig bestimmt.

Ergänzend zum erfindungsgemäßen Verfahren werden der Dampfmengenstrom im System und der Flüssigkeitsdurchsatz durch den Reaktorkern gemessen und die gemessene Druckdifferenz zwischen dem Reaktordruckbehälter und der Vergleichssäule durch zwei Korrekturglieder korrigiert, wobei das erste vom Dampfmengenstrom und das zweite vom Kerndurchsatz funktional abhängt.

Abhängig von der Strömungsgeschwindigkeit des Frischdampfes in der Anlage stellt sich ein Druckverlust in · Dampfraum des Reaktordruckbehälters ein, der sich auf die Messung der Druckdifferenz auswirkt. Eine Korrektur ist mit Hilfe einer kontinuierlichen Messung des Dampfmengenstromes leicht durchführbar.

Die Strömung der Flüssigkeit im Reaktordruckbehälter bewirkt am Meßstutzen für die Druckdifferenz einen Unterdruck, der die Druckdifferenzmessung stört. Eine Korrektur ist mit Hilfe einer kontinuierlichen Überwachung des Kerndurchsatzes auf einfache Weise durchzuführen.

Mit diesen beiden zusätzlichen Korrekturen der gemessenen Druckdifferenz zwischen Reaktordruckbehälter und Vergleichssäule erzielt man einen Wert für den Füllstand im Reaktordruckbehälter, der selbst von dynamischen Einflüssen unabhängig ist. Dadurch ist die Meßgenauigkeit noch weiter verbessert.

Eine Einrichtung zur Durchführung des erfindungsgemäßen Verfahrens weist einen Druckdifferenzmesser auf, der zwischen den mit Flüssigkeit gefüllten unteren Teilraum des Reaktordruckbehälters und einer Vergleichssäule angeordnet ist. Diese ist über ein an ihr oben angeformtes Gefäß mit dem dampfgefüllten oberen Teilraum des Reaktordruckbehälters verbunden. Außerdem weist die Einrichtung einen Druckmesser auf, der direkt am dampfgefüllten oberen Teilraum des Reaktordruckbehälters angeschlossen ist. Der Druckdifferenzmesser und der Druckmesser sind über elektrische Leitungen mit einer Auswerteeinheit zum Bestimmen des Füllstandes verbunden.

Zur Verbesserung der Meßgenauigkeit ist vorgesehen, daß außerhalb der Vergleichssäule ein Temperatursensor angeordnet und mit der Auswerteeinheit verbunden ist.

Ein weiterer Temperatursensor ist in der Kühlflüssigkeit angeordnet. Auch er ist mit der Auswerteeinheit verbunden. Eine Datenleitung für die Reaktorleistung steht ebenfalls mit der Auswerteeinheit in Verbindung. In der Auswerteeinheit befindet sich ein Zeitglied und mindestens ein Komparator zum Bestimmen der zeitlichen Änderung des vom Druckmesser gemessenen Dampfdruckes im Reaktordruckbehälter. Der Ausgang der Auswerteeinheit, an dem ein Wert für den Füllstand im Reaktordruckbehälter ansteht, ist beispielsweise mit einem Steuerglied oder einem Anzeigegerät verbunden.

Mit dieser Einrichtung ist das erfindungsgemäße Verfahren mit einfachen Mitteln zuverlässig durchführbar. Man erhält, selbst bei einem Störfall, einen zuverlässigen Wert für den Füllstand im Reaktordruckbehälter.

Der außerhalb von der Vergleichssäule angeordnete Temperatursensor steht mit der Auswerteeinheit beispielsweise über ein Verzögerungsglied in Verbindung. Damit wird vorteilhaft die Zeitdifferenz zwischen einer Temperaturänderung außerhalb der Vergleichssäule und der dadurch ausgelösten Dichteänderung in der Vergleichssäule überbrückt und in der Auswerteeinheit werden stets korrekte Dichtewerte bestimmt.

Ergänzend zur erfindungsgemäßen Einrichtung ist in den Dampfableitungen des Reaktordruckbehälters ein Dampfdurchsatzmesser angeordnet. Darüber hinaus befindet sich vor dem Reaktorkern ein Kerndurchsatzmesser. Die beiden Meßgeräte sind über elektrische Leitungen mit der Auswerteeinheit verbunden. Mit diesen zusätzlichen Meßgeräten wird der Vorteil erzielt, daß dynamische Einflüsse auf die Flüssigkeits- und Dampfdruckmessung im Reaktordruckbehälter überwachbar sind. Dadurch werden die Werte für den Füllstand im Reaktordruckbehälter weiter verbessert.

Mit der Erfindung wird der Vorteil erzielt, daß erstmals selbst während eines Störfalles der Füllstand im Reaktordruckbehälter eines Siedewasserreaktors stets zuverlässig mit guter Genauigkeit bestimmbar ist.

Die Erfindung wird anhand der Zeichnung näher erläutert:

Die Zeichnung zeigt eine erfindungsgemäße Einrichtung zum Messen des Füllstandes in einem Reaktordruckbehälter eines Siedewasserreaktors.

In einem Reaktordruckbehälter 1 ist der untere Teilraum 11 mit Flüssigkeit und der obere Teilraum 12 mit Dampf angefüllt. Zum Bestimmen des Füllstandes ist zwischen einem Anschlußflansch 13 am unteren Teilraum 11 und einer Vergleichssäule 2, die mit Flüssigkeit gefüllt ist,ein Druckdifferenzmesser 3 angeordnet. An der Vergleichssäule 2 ist oben ein Gefäß 21 angeformt, das teilweise mit Flüssigkeit gefüllt ist und dessen Dampfraum über eine Leitung an einem Flansch 14 mit dem oberen Teilraum 12 des Reaktordurckbehälters 1 verbunden ist.

In der Zeichnung ist der vertikale Abstand zwischen den beiden Anschluß flanschen 13 und 14 am Reaktordruckbehälter 1 mit a bezeichnet. Der vertikale Abstand zwischen dem unteren Flansch 13 und dem Flüssigkeitsspiegel 15 im Reaktordruckbehälter 1 ist mit $h_1$ bezeichnet. Der mit dem Druckdifferenzmesser 3 gemessene Wert ist dann

$$\Delta p = g\ [\rho_0{\cdot}a - \rho_1{\cdot}h_1 - \rho_2(a-h_1)]$$

Dabei bedeutet $\rho_0$ die Flüssigkeitsdichte in der Vergleichssäule 2, $\rho_1$ die Flüssigkeitsdichte im unteren Teilraum 11 und $\rho_2$ die Dampfdichte im oberen Teilraum 12 des Reaktordruckbehälters 1. g steht für die Erdbeschleunigung.

Die Füllstandshöhe im Reaktordruckbehälter ist die Summe aus $h_1$ und dem konstanten vertikalen Abstand $h_0$ zwischen dem Boden des Reaktordruckbehälters 1 und dem Anschlußflansch 13. Die Füllstandshöhe H wird also aus der funktionalen Beziehung

$$H = h_0 + \frac{g \cdot a \cdot (\rho_0 - \rho_2) - \Delta p}{g \cdot (\rho_1 - \rho_2)}$$

bestimmt.

Neben dem Differenzdruckmesser 3 weist die erfindungsgemäße Einrichtung zur Füllstandsmessung weitere Meßgeräte für solche Meßgrößen auf, die die benötigten Dichten $\rho_0$, $\rho_1$ und $\rho_2$ beeinflussen. Der Druckdifferenzmesser 3 sowie die zusätzlichen Meßgeräte stehen mit einer Auswerteeinheit 4 in Verbindung, in der aus den Meßwerten zusammen mit den bekannten Drucken bei Normalbedingungen, den bekannten geometrischen Abmessungen und der bekannten Erdbeschleunigung g die Füllstands höhe H im Reaktordruckbehälter 1 bestimmt wird. Die Auswerteeinheit 4 ist an ihrem Ausgang mit einem Steuerglied 5 oder einem Anzeigegerät verbunden.

Die erfindungsgemäße Einrichtung enthält folgende zusätzliche Meßgeräte:

Da die Flüssigkeitsdichte in der Vergleichssäule 2 von der Umgebungstemperatur abhängt, ist außerhalb der Vergleichssäule 2 ein Temperatursensor 6 angeordnet. Damit die Zeitdifferenz zwischen einer Temperaturänderung an der Vergleichssäule 2 und der dadurch ausgelösten Dichteänderung in der Vergleichssäule 2 überbrückt wird, steht der Temperatursensor 6 mit der Auswerteeinheit 4 über ein Verzögerungsglied 7 in Verbindung. Da die Abhängigkeit der Flüssigkeitsdichte $\rho_0$ vom Druck vernachlässigbar ist, ist in der Auswerteeinheit 4 aus dem gemessenen Temperaturwert jeweils die momentane Dichte $\rho_0$ in der Vergleichssäule 2 bestimmbar.

Um die Dichte $\rho_2$ im oberen dampfgefüllten Teilraum 12 des Reaktordruckbehälters 1 zu bestimmen, wird dort der Druck mit einem Drucksensor 8 gemessen, der mit dem oberen Anschlußflansch 14 verbunden ist. Die Druckwerte werden der Auswerteeinheit 4 zugeführt.

Auch die Dichte $\rho_1$ im unteren mit Flüssigkeit gefüllten Teilraum 11 des Reaktordruckbehälters 1 ist vom Druck im oberen Teilraum 12 abhängig und wird mit den Meßwerten des Drucksensors 8 in der Auswerteeinheit 4 korrigiert. Darüber hinaus ist die Flüssigkeitsdichte $\rho_1$ im unteren Teilraum 11 bei Störungen, die mit einem Absinken des Druckes im Reaktordruckbehälter 1 verbunden sind, von weiteren Parametern abhängig. Durch den Druckabfall kommt es im Reaktordruckbehälter 1 zu einer Gemischbildung, wobei das Ansteigen der Gemischfront außer vom Druck auch von der Reaktorleistung, der Flüssigkeitstemperatur (Unterkühlung) sowie der zeitlichen Druckänderung und der Dauer der Druckänderung abhängt. Diese Größen sind meßtechnisch zu erfassen. Dazu ist im unteren Teilraum 11 des Reaktordruckbehälters 1 ein weiterer Temperatursensor 9 angeofdnet, der mit der Auswerteeinheit 4 in Verbindung steht. Mit der Auswerteeinheit 4 ist außerdem eine Datenleitung 10 verbunden, durch die Meßdaten der Reaktorleistung von außen zugeführt werden.

Die Auswerteeinheit 4 enthält ein Zeitglied und mindestens einen Komparator, so daß in der Auswerteeinheit 4 aus den Druckwerten des Drucksensors 8 die zeitliche Druckänderung und die Dauer der Druckänderung zu bestimmen ist.

Der Ausgang der Auswerteeinheit 4, an dem ein von äußeren Einflüssen freier Wert für den Füllstand im Reaktordruckbehälter 1 ansteht, ist mit dem Steuerglied 5 verbunden.

Der mit dem Druckdifferenzmesser 3 bestimmte Wert wird außerdem durch die Strömungsgeschwindigkeit der Flüssigkeit am Anschlußflansch 13 beeinflußt. Damit auch dieser Einfluß zu beseitigen ist, ist vor dem Reaktor kern ein Kerndurchsatzmesser 17 angeordnet. Die Frischdampfströmung im Reaktordruckbehälter 1 durch den Dampftrockner verursacht wegen der Geometrie des Systems im oberen Teilraum 12 des Reaktordruckbehälters 1 einen Druckabfall, dessen Auswirkungen auf die Druckdifferenzmessung durch die Meßwerte eines Dampfdurchsatzmessers 16 in der Dampfableitung kompensiert werden.

Mit den zusätzlichen Meßeinrichtungen am Reaktordruckbehälter 1 werden neben der Druckdifferenz $\Delta p$ auch die Dampf- und Flüssigkeitsdichten $\rho_0$, $\rho_1$ und $\rho_2$ und damit die Füllstandshöhe H im Reaktordruckbehälter 1 mit großer Zuverlässigkeit bestimmt.

## Patentansprüche

1. Verfahren zur Füllstandsmessung einer Flüssigkeit in einem Reaktordruckbehälter (1) eines Siedewasserreaktors, wobei im oberen dampfgefüllten Teilraum (12) des Reaktordruckbehälters (1) der Druck gemessen wird und wobei zwischen dem mit Flüssigkeit gefüllten unteren Teilraum (11) des Reaktordruckbehälters (1) und einer Vergleichssäule (2), die mit dem dampfgefüllten oberen Teilraum (12) des Reaktordruckbehälters (1) verbunden ist, die Druckdifferenz gemessen wird und wobei dann aus den Flüssigkeitsdichten im unteren Teilraum (11) des Reaktordruckbehälters (1) und in der Vergleichssäule (2), aus der Dampfdichte im oberen Teilraum (12), die aus dem gemessenen Druck bestimmbar ist und aus der gemessenen Druckdifferenz der Füllstand im Reaktordruckbehälter (1) bestimmt wird, **dadurch gekennzeichnet,** daß die zeitliche Druckänderung im oberen dampfgefüllten Teilraum (12) des Reaktordruckbehälters (1), die Reaktorleistung und die Flüssigkeitstemperatur im Reaktordruckbehälter (1) gemessen werden und daraus mit dem gemessenen Druck im Dampfraum (12) und mit bekannten Abmessungen und Größen die Flüssigkeitsdichte im unteren Teilraum (11) des Reaktordruckbehälters (1) bestimmt wird und daß die Umgebungstemperatur im Bereich der Vergleichssäule (2) gemessen und mit bekannten Größen daraus die Flüssigkeitsdichte in der Vergleichssäule (2) bestimmt wird.

2. Verfahren nach Anspruch 1, **dadurch gekennzeichnet,** daß der Dampfdurchsatz und der Flüssigkeitsdurchsatz des Reaktordruckbehälters (1) gemessen werden und daß die gemessene Druckdifferenz durch zwei Korrekturglieder korrigiert wird, wobei das erste Korrekturglied mit dem Dampfdurchsatz und das zweit Korrekturglied mit dem Flüssigkeitsdurchsatz variiert.

3. Einrichtung zur Durchführung des Verfahrens nach Anspruch 1 mit einem Druckdifferenzmesser (3), der zwischen dem mit Flüssigkeit gefüllten unteren Teilraum (11) des Reaktordruckbehälters (1) und einer Vergleichssäule (2) angeordnet ist, die über ein an ihr oben angeformtes Gefäß mit dem dampfgefüllten oberen Teilraum (12) des Reaktordruckbehälters (1) verbunden ist, und mit einem Druckmesser (8), der am dampfgefüllten oberen Teilraum (12) des Reaktordruckbehälters (1) direkt angeschlossen ist, wobei der Druckdifferenzmesser (3) und der Druckmesser (8) über elektrische Leitungen mit einer Auswerteeinheit (4) zum Bestimmen des Füllstandes im Reaktordruckbehälter (1) verbunden sind, **dadurch gekennzeichnet,** daß außerhalb der Vergleichssäule (2) ein Temperatursensor (6) angeordnet und mit der Auswerteeinheit (4) verbunden ist, daß im Flüssigkeitssystem des Reaktordruckbehälters (1) ein weiterer Temperatursensor (9) angeordnet ist, der mit der Auswerteeinheit (4) verbunden ist, daß eine Datenleitung (10) für die Reaktorleistung mit der Auswerteeinheit (4) verbunden ist, daß die Auswerteeinheit (4) ein Zeitglied und mindestens einen Komparator enthält zur Bestimmung der zeitlichen Änderung des vom Druckmesser (8) gemessenen Druckes und daß der Ausgang der Auswerteeinheit (4), an dem ein Wert für den Füllstand im Reaktordruckbehälter (1) ansteht, mit einem Steuerglied (5) verbunden ist.

4. Einrichtung nach Anspruch 3, **dadurch gekennzeichnet,** daß der außerhalb der Vergleichssäule (2) angeordnete Temperatursensor (6) zur Überbrückung der Zeitdifferenz zwischen Temperaturänderung und Dichteänderung in der vergleichssäule (2) über ein Verzögerungsglied (7) mit der Auswerteeinheit (4) in Verbindung steht.

5. Einrichtung nach Anspruch 3, **dadurch gekennzeichnet,** daß in den Dampfableitungen des Reaktordruckbehälters (1) Dampfdurchsatzmesser (16) angeordnet sind, die zur Korrektur der gemessenen Druckdifferenz mit der Auswerteeinheit (4) verbunden sind.

6. Einrichtung nach Anspruch 3, **dadurch gekennzeichnet,** daß vor dem Reaktorkern ein Kerndurchsatzmesser (17) angeordnet ist, der zur Korrektur der gemessenen Druckdifferenz mit der Auswerteeinheit (4) verbunden ist.

**Claims**

1. Method for measuring the top level of a liquid in a reactor pressure vessel (1) of a boilingwater reactor, wherein in the upper steam-filled subspace (12) of the reactor pressure vessel (1) the pressure is measured and wherein between the lower subspace (11) of the reactor pressure vessel filled with liquid and a comparison column (2), which is connected to the steam-filled upper subspace (12) of the reactor pressure vessel (1), the pressure difference is measured and wherein then from the liquid density in the lower subspace (11) of the reactor pressure vessel (1) and in the comparison column (2), from the steam density in the upper subspace (12), which is able to be determined from the measured pressure, and from the measured pressure difference, the top level in the reactor pressure vessel (1) is determined, characterised in that the temporal change in pressure is measured in the upper steam-filled subspace (12) of the reactor pressure vessel (1) as well as the reactor output and the liquid temperature in the reactor pressure vessel (1) and from this the liquid density in the lower subspace (11) of the reactor pressure vessel (1) is determined with the measured pressure in the steam space (12) and with the known dimensions and magnitude and in that the ambient temperature in the region of the comparison column (2) is measured and with a known magnitude the liquid density in the comparison column (2) is determined from this.

2. Method according to claim 1, characterised in that the rate of flow of steam and the rate of flow of liquid of the reactor pressure vessel (1) are measured and in that the measured pressure difference is corrected by two correcting elements, wherein the first correcting element varies with the rate of flow of steam and the second correcting element with the rate of flow of liquid.

3. Arrangement for carrying out the method according to claim 1 with a pressure difference gauge (3) which is arranged between the lower subspace (11) of the reactor pressure vessel (1) and a comparison column (2) which is connected, by way of a receptacle preformed above thereon, to the steam-filled upper subspace (12) of the reactor pressure vessel (1) and with a pressure gauge (8) which is directly attached to the steam-filled upper subspace (12) of the reactor pressure vessel (1), wherein the pressure difference gauge (3) and the pressure gauge (8) are connected by way of electrical lines to an evaluating unit (4) for determining the top level in the reactor pressure vessel (1), characterised in that a temperature sensor (6) is arranged outside the comparison column (2) and connected to the evaluating unit (4), in that in the liquid system of the reactor pressure vessel (1) a further temperature sensor (9) is arranged which is connected to the evaluating unit (4), in that a data line (10) for the reactor output is connected to the evaluating unit (4), in that the evaluating unit (4) contains a timing element and at least one comparator for determining the temporal change of the pressure measured by the pressure gauge (8) and in that the outlet of the evaluating unit (4), at which there is present a value for the top level in the reactor pressure vessel (1), is connected to a control member (5).

4. Arrangement according to claim 3, characterised in that the temperature sensor (6) arranged outside the comparison column (2) for bridging the time difference between the temperature change and change in density in the comparison column (2) is connected, by way of a delay element (7), to the evaluating unit (4).

5. Arrangement according to claim 3, characterised in that arranged in the steam outlets of the reactor pressure vessel (1) there are gauges for the flow of steam (16) which are connected to the evaluating unit (4) for correcting the measured pressure difference.

6. Arrangement according to claim 3, characterised in that arranged before the reactor nucleus there is a nucleus output gauge (17) which is connected to the evaluating unit (4) for correcting the measured pressure difference.


**Revendications**

1. Procédé de mesure des niveau d'un liquide dans la cuve sous pression (1) d'un réacteur à eau bouillante, qui consiste à mesurer la pression à la partie supérieure (12) emplie de vapeur de la cuve sous pression (1) du réacteur et à déterminer la différence de pression entre la partie inférieure (11) emplie de liquide de la cuve sous pression (1) du réacteur et une colonne de comparaison (2) qui communique avec la partie supérieure (12) emplie de vapeur de la cuve sous pression (1) du réacteur, et à déterminer ensuite le niveau de la cuve sous pression (1) du réacteur à partir des masses volumiques du liquide dans la partie inférieure (11) de la cuve sous pression (1) du réacteur et dans la colonne de comparaison (2), à partir de la masse volumique de la vapeur dans la partie supérieure (12) qui peut être déterminée à partir de la pression mesurée et à partir de la différence de pression mesurée, caractérisé en ce qu'il consiste, à mesurer la variation de pression en fonction du temps dans la partie supérieure (12) emplie de vapeur de la cuve sous pression (1) du réacteur, la puissance du réacteur et la température du liquide dans la cuve sous pression (1) du réacteur et à déterminer à partir de cela, avec la pression mesurée dans la partie supérieure réservée à la vapeur (12), et avec les dimensions et les grandeurs connues, la masse volumique du liquide dans la partie inférieure (11) de la cuve sous pression (1) du réacteur et, à mesurer la température ambiante dans la région de la colonne de comparaison (2) et à en déterminer avec des grandeurs connues la masse volumique du liquide dans la colonne de comparaison (2).

2. Procédé suivant la revendication 1, caractérisé en ce qu'il consiste, à mesurer le débit de vapeur et le débit de liquide de la cuve sous pression (1) du réacteur et à corriger la différence de pression mesurée par deux éléments de correction, le premier élément de correction variant avec le débit de vapeur et le second élément de correction avec le débit de liquide.

3. Dispositif pour mettre en œuvre le procédé, suivant la revendication 1, comprenant un dispositif de mesure de la différence de pression (3), qui est interposé entre la partie inférieure (11) emplie de liquide de la cuve sous pression (1) du réacteur et une colonne de comparaison (2) qui communique avec la partie supérieure (12) emplie de vapeur de la cuve sous pression (1) du réacteur par un vase ménagé à sa partie supérieure, et un manomètre (8) qui est relié directement à la partie supérieure (12) emplie de vapeur de la cuve sous pression (1) du réacteur, le dispositif de mesure de la différence de pression (3) et le manomètre (8) étant relié par des conducteurs électriques à une unité d'exploitation (4) destinée à déterminer le niveau dans la cuve sous pression (1) du réacteur, caractérisé, en ce qu'un détecteur de température (6) est monté à l'extérieur de la colonne de comparaison (2) et est relié à l'unité d'exploitation (4), en ce que dans le système pour le liquide de la cuve sous pression (1) du réacteur est monté un autre détecteur de température (9) qui est relié à l'unité d'exploitation (4), en ce qu'un conducteur de données (10) pour la puissance du réacteur est relié à l'unité d'exploitation (4), en ce que l'unité d'exploitation (4) contient un relais de temporisation et au moins un comparateur, pour déterminer la variation en fonction du temps de la pression mesurée par le manomètre (8) et en ce que la sortie de l'unité d'exploitation (4), sur laquelle apparaît la valeur du niveau de la cuve sous pression (1) du réacteur, est reliée à un organe de commande (5).

4. Dispositif suivant la revendication 3, caractérisé, en ce que le détecteur de température (6), monté à l'extérieur de la colonne de comparaison (2), est relié à l'unité d'exploitation (4) par un élément de retard (7) pour compenser la différence de temps entre la variation de température et la variation de la masse volumique dans la colonne de comparaison (2).

5. Dispositif suivant la revendication 3, caractérisé, en ce que dans les conduits d'évacuation de la vapeur de la cuve sous pression (1) du réacteur sont montés des dispositifs de mesure du débit de la vapeur (16), qui sont reliés à l'unité d'exploitation (4) pour corriger la différence de pression mesurée.

6. Dispositif suivant la revendication 3, caractérisé, en ce que, en amont du cœur du réacteur est monté un dispositif de mesure du débit du cœur (17), qui est relié à l'unité d'exploitation (4) pour la correction de la différence de pression mesurée.